# EUROPÄISCHE PATENTSCHRIFT

(11) **EP 2 952 433 B1**
(45) Veröffentlichungstag und Bekanntmachung des Hinweises auf die Patenterteilung: **22.11.2017**
(21) Anmeldenummer: 15170411.1
(22) Anmeldetag: 03.06.2015
(51) Int. Cl.: B60N 3/10, B64D 11/06, F16B 45/04

(54) **FLUGZEUGSITZ**
AIRCRAFT SEAT
SIÈGE D'AVION

(30) Priorität: 06.06.2014 DE 102014210861
(43) Veröffentlichungstag der Anmeldung: 09.12.2015
(73) Patentinhaber: Lufthansa Technik AG, 22335 Hamburg (DE)
(72) Erfinder: Thomaschewski, Oliver, 22846 Norderstedt (DE); Klatt, Frank, 22844 Norderstedt (DE)
(74) Vertreter: Müller Verweyen

(56) Entgegenhaltungen:
- WO-A1-2011/070516
- DE-C1- 19 833 888
- DE-U1-202010 002 082
- GB-A- 2 469 683
- US-A- 5 524 958
- US-A1- 2002 043 826
- US-A1- 2007 051 764

## Beschreibung

Die Erfindung betrifft einen Flugzeugsitz mit den Merkmalen des Oberbegriffs des unabhängigen Anspruchs 1.

Flugzeugsitze weisen typischerweise verschiedene Funktionalitäten auf, die von einem Passagier, welcher auf dem Flugzeugsitz sitzt, genutzt werden können. In verschiedenen Kabinenausstattungen ist der Flugzeugsitz räumlich in größerem Abstand zu weiteren Flugzeugsitzen in der Kabine eines Flugzeugs angeordnet. Dies ist z.B. bei VIP Ausstattungen von Flugzeugen der Fall, wo die Möglichkeit, die angrenzenden Flugzeugsitze zur Platzierung der verschiedenen Funktionalitäten zu nutzen, entfällt. Es ist dabei allgemein bekannt, den Flugzeugsitz mit einer Getränkehalterung auszustatten.

Typische Getränkehalterungen an Flugzeugsitzen sind so aufgebaut, dass sie einen meist zylindrischen Aufnahmeraum aufweisen, in dem ein Gefäß gehalten werden kann; es handelt sich dabei um die sogenannten Becherhalter. Durch einen Boden solcher Becherhalter wird das Gefäß in vertikaler Richtung nach unten gesichert, während eine Wand das Verrutschen des Gefäßes in horizontaler Richtung verhindert. Da es in einem Flugzeug insbesondere während des Start- und Landevorgangs, aber auch bei Turbulenzen, zu hohen Beschleunigungen kommen kann, muss die Wand der Getränkehalterung eine bestimmte Höhe aufweisen, damit eine zuverlässige Halterung des Gefäßes in dem Becherhalter gewährleistet ist. Daraus ergibt sich eine vertikale Erstreckung des Becherhalters, die optisch nicht den Ansprüchen einer hochwertigen Flugzeugausstattung genügt bzw. einen entsprechenden Bauraumbedarf aufweist. Gegen ein Herausrutschen des Gefäßes in vertikaler Richtung nach oben bietet der typische Becherhalter keine Sicherung.

Des Weiteren ist aufgrund der vertikalen Erstreckung des Becherhalters die Integration in einem Flugzeugsitz nur schwer möglich. Dabei ist das Verstauen der Getränkehalterung in einer Aufnahme des Flugzeugsitzes z.B. nur dadurch möglich, dass der Becherhalter selbst oder die Halterung durch einen komplexen Aufbau mit mehreren zusammenwirkenden Teilen gebildet ist, die zu Verschleiß und damit zu erhöhten Aufwänden bei der Instandhaltung führen können.

Aus dem Stand der Technik bekannte Getränkehalterungen eignen sich vorrangig für Gefäße, wie zylindrische Gläser, Flaschen oder Kaffeebecher, die einen vergleichsweise niedrigen Schwerpunkt aufgrund der zum planen Boden hin verteilten Masse aufweisen. Insbesondere im Premium Segment werden dem Passagier die Getränke auch in Gefäßen mit Stiel, einer Kuppa und einem Fuß serviert; unter diese Kategorie von Gefäßen fallen beispielsweise Sektgläser oder Weingläser. Durch den Stiel und die darüber angeordnete Kuppa sind diese Gefäße relativ hoch und schmal. Zudem ergibt sich durch die oberhalb des Stiels angeordnete Kuppa ein erhöhter Schwerpunkt, der zu einer erhöhten Kippneigung des Gefäßes führt. Ein solches Gefäß würde daher in dem Aufnahmeraum einer aus dem Stand der Technik bekannten Getränkehalterung, wie beispielsweise einem Becherhalter, leicht verrutschen oder kippen.

Die WO 2011/070516 A1 offenbart einen Becherhalter mit einer Aufnahme, einer Trageeinrichtung und einer Becheraufnahme. Die Aufnahme ist über die Trageeinrichtung mit der Becheraufnahme verbunden. Die Trageeinrichtung und die Becheraufnahme sind in einer Parkstellung in der Aufnahme verstaubar. Die Becheraufnahme ist gegenüber der Trageeinrichtung um eine horizontal ausgerichtete Achse schwenkbar.

Aus der US 2007/0051764 A1 ist ein faltbarer Becherhalter bekannt, der ein Paar bewegbare Haltearme aufweist. Die Haltearme bilden eine ringförmige Halterung mit einer Öffnung, wobei durch die Bewegbarkeit der Haltearme eine Anpassung an den Durchmesser des zu haltenden Bechers vorgenommen werden kann.

Die DE 20 2010 002 082 U1 offenbart einen Klapptisch für die Rückenlehne eines Flugzeugsitzes, wobei in der Tischoberfläche eine Vertiefung zur Aufnahme eines Trinkgefäßes vorgesehen ist. Eine ähnliche Lösung ist auch in der US 2002/0043826 A1 offenbart.

Weiter offenbart die DE 198 33 888 C1 einen Klapptisch zur Anbringung an einer Rückseite einer Rückenlehne eines Fahrgastsitzes in einem Omnibus oder Flugzeug. Dabei weist der Klapptisch einen nach oben schwenkbaren Halter zum Einstellen eines Getränkebehälters auf. Damit der Halter für das Getränkebehältnis auch bei hochgelapptem Klapptisch nutzbar ist, wird vorgeschlagen, den Halter auch nach unten ausschwenkbar auszugestalten.

Die aus dem Stand der Technik bekannten Flugzeugsitze mit Getränkehalterungen sind damit nicht dafür geeignet, ein Gefäß mit Stiel, Kuppa und Fuß zuverlässig zu halten.

Es ist Aufgabe der Erfindung, einen Flugzeugsitz und eine Haltevorrichtung bereitzustellen, mit der eine verbesserte Halterung von Gefäßen mit Stiel, Kuppa und Fuß möglich ist.

Die Erfindung ist in den beigefügten Ansprüchen definiert. Gemäß dem Grundgedanken der Erfindung wird zur Lösung der Aufgabe vorgeschlagen, dass die Halteplatte eine Aussparung zur Aufnahme des Gefäßes im Bereich der Kuppa aufweist, wobei wenigstens ein Randbereich der Aussparung bis zu einem Rand der Halteplatte reicht, wobei die Halteplatte in der Nutzstellung derart angeordnet ist, dass die Aussparung frei zugänglich ist. Als Getränkehalter fungiert damit vorzugsweise die Halteplatte mit ihrer Aussparung. Die Halteplatte erstreckt sich dabei im Wesentlichen in einer Ebene, wobei diese Ebene in der Nutzstellung weitestgehend parallel zu einer Sitzfläche des Flugzeugsitzes ausgerichtet ist. Der Getränkehalter weist damit einen sehr geringen Bauraum auf, so dass dieser unauffällig in das Design des Flugzeugsitzes integriert werden kann. Die Halteplatte weist eine Aussparung auf, die so dimensioniert ist, dass durch sie das Gefäß im Bereich der Kuppa aufgenommen werden kann. Nachfolgend bezieht sich der Begriff Gefäß stets auf ein Gefäß mit Kuppa, Stiel und Fuß. Das Gefäß kann somit durch die Aussparung formschlüssig nahe dem Schwerpunkt des Gefäßes gehalten werden. Dies führt dazu, dass die auf das Gefäß wirkenden Kippmomente reduziert werden und damit das Gefäß zuverlässig in der Aussparung gehalten wird. Zumindest ein Randbereich der Aussparung reicht dabei bis zum Rand der Halteplatte. Als Rand der Halteplatte ist dabei eine Seitenfläche oder mehrere Seitflächen zu verstehen, die eine erste Grundfläche der Halteplatte mit einer zweiten Grundfläche der Halteplatte miteinander verbinden. Die Halteplatte weist somit eine gewisse Höhe auf, die vorzugsweise kleiner als 40 mm ist, weiter vorzugsweise kleiner als 20 mm und insbesondere vorzugsweise kleiner als 10 mm. Vorzugsweise ist die Halteplatte so dimensioniert, dass eine Länge der Halteplatte im Verhältnis zur Höhe groß ist; vorzugsweise liegt dabei das Verhältnis der Länge zu der Höhe der Halteplatte zwischen 2 und 40, weiter vorzugsweise zwischen 10 und 30. Über den Randbereich kann der im Wesentlichen orthogonal zu der Halteplatte ausgerichtete Stiel des Gefäßes in die Aussparung geführt werden. Sobald sich der Stiel in der Aussparung befindet, kann das Gefäß abgesetzt werden, so dass die Kuppa durch die Aussparung gehalten wird. Vorzugsweise wird die Aussparung durch eine Öffnung in der Halteplatte gebildet und der Randbereich durch eine Nut, die sich von dem Rand der Halteplatte bis zu der Öffnung erstreckt. In einer alternativen Ausführungsform kann die Geometrie der Aussparung auch so in die Geometrie des Randbereichs übergehen, dass durch den Randbereich keine Verjüngung zwischen dem Rand und der Aussparung gebildet wird. Durch die geringen Abmessungen der Halteplatte kann die an der Trägerplattform drehbar befestigte Halteplatte mit einfachen mechanischen Mitteln in die Parkstellung bewegt werden. In der Nutzstellung ist die Halteplatte so ausgerichtet, dass die Aussparung frei zugänglich ist, d.h. die Halteplatte wird allein durch die Trägerplattform im Raum gehalten. Weitere Haltemittel, wie z.B. ein Boden, können damit entfallen. Der Getränkehalter umfasst damit neben der Halteplatte keine weiteren Elemente, die die Zugänglichkeit der Aussparung behindern. Frei zugänglich ist im Sinne der Erfindung so zu verstehen, dass die Aussparung weder nach oben noch nach unten begrenzt ist. Damit können in der Aussparung Gefäße mit vergleichsweise langen Stielen und unterschiedlich hohen Kuppas aufgenommen werden. Ein weiterer Vorteil des erfindungsgemäßen Flugzeugsitzes ergibt sich durch die Befestigung der Halteplatte über der Verbindungsvorrichtung und die Trägerplattform an dem Flugzeugsitz. Neben der ergonomisch günstigen Beweglichkeit der Halteplatte wird durch diese Befestigung zusätzlich eine Dämpfungswirkung erzielt, so dass Bewegungen des Sitzes nur gedämpft auf die Halteplatte übertragen werden. Bewegungen des Passagiers, z.B. beim Platznehmen in dem Flugzeugsitz, werden durch diese Art der Befestigung zumindest teilweise kompensiert, so dass das Gefäß in der Ruheposition verbleibt und ein Austreten des Getränks aus dem Gefäß vermieden wird.

Weiter wird vorgeschlagen, dass der Flugzeugsitz mindestens eine Armlehne umfasst, wobei die bewegliche Trägerplattform an oder in der Armlehne angeordnet ist. Durch die Anordnung der Trägerplattform an der Armlehne kann die Halteplatte für den Passagier in einer einfach mit der Hand zu erreichenden Position gehalten werden.

Erfindungsgemäß ist die Verbindungsvorrichtung der Halteplatte verschwenkbar an dem Verbindungsanschluss der Trägerplattform angeschlossen, wobei die Rotationsachse hierbei im Wesentlichen orthogonal zu der Ebene der Sitzfläche des Flugzeugsitzes ausgerichtet ist. Durch die Verschwenkbarkeit der Halteplatte um die orthogonal zur Ebene der Sitzfläche ausgerichtete Rotationsachse gegenüber der Trägerplattform und damit gegenüber dem Flugzeugsitz kann der Passagier die Halteplatte zu sich hinbewegen, so dass er in einem ergonomisch günstigen Bewegungsablauf das Gefäß abstellen oder aus der Aussparung entnehmen kann. Möchte der Passagier den Flugzeugsitz verlassen, kann die Halteplatte von dem Passagier wegbewegt werden, so dass eine Aufstehbewegung des Passagiers nicht behindert wird.

Bevorzugt befindet sich die Halteplatte unmittelbar nach Vollziehen der Bewegung von der Parkstellung in die Nutzstellung in einer Initialstellung, wobei die Halteplatte in der Initialstellung so angeordnet ist, dass der Randbereich durch die Aussparung im Wesentlichen in orthogonaler Richtung zu einer Längsachse des Flugzeugsitzes bis zu dem Rand der Halteplatte geöffnet ist. Die Initialstellung ist dabei die Stellung, die die Halteplatte unmittelbar nach dem Erreichen der Nutzstellung einnimmt. Die Initialstellung ist somit vorzugsweise eine von vielen Nutzstellungen, die die Halteplatte einnehmen kann. Unter der Längsachse des Flugzeugsitzes ist die geradeaus gerichtete Blickrichtung des auf dem Flugzeugsitz sitzenden Passagiers zu verstehen. In der Regel verläuft die Längsachse des Flugzeugsitzes parallel zu der Längsachse des Flugzeugs. Durch eine Anordnung des Randbereiches orthogonal zu der Längsrichtung des Flugzeugsitzes kann das Gefäß nur durch eine Bewegung, die im Wesentlichen orthogonal zu der Längsachse des Flugzeugs verläuft, in die Aussparung bzw. aus der Aussparung heraus bewegt werden. Diese Ausführungsform ist besonders vorteilhaft, da während des normalen Flugbetriebs die größten Kräfte in Richtung der Längsachse des Flugzeuges wirken. Ein Herausfallen des Gefäßes durch diese Kräfte kann so durch diese vorteilhafte Anordnung des Randbereichs verhindert werden. Ferner wird das Gefäß dadurch in einer quer zu der Längsachse des Fahrzeugsitzes ausgerichteten Bewegung in die Aussparung ein- und ausgeführt, was für den Insassen sehr einfach zu handhaben ist.

Vorzugsweise ist an der Halteplatte eine Verriegelungseinrichtung vorgesehen, durch die der Randbereich der Aussparung vollständig von dem Rand der Halteplatte abgrenzbar ist. In einer geöffneten Stellung der Verriegelungseinrichtung kann das Gefäß über den Randbereich in die Aussparung bewegt werden. Anschließend kann die Verriegelungseinrichtung in die geschlossene Stellung bewegt werden, so dass das Gefäß nicht mehr über den Randbereich aus der Aussparung entnommen werden kann. In der Regel ist der Fuß des Gefäßes größer als die Aussparung, so dass das Gefäß auch nicht durch eine Vertikalbewegung nach oben aus der Aussparung bewegt werden kann. In der geschlossenen Stellung der Verriegelungseinrichtung ist das Gefäß somit in allen Raumrichtungen gesichert und die Aussparung zu allen Umfangsrichtungen hin geschlossen. Das Herausfliegen des Gefäßes kann so in unruhigen Flugphasen verhindert werden und die Passagiere vor Verletzungen geschützt werden.

Bevorzugt kann die Verriegelungseinrichtung durch eine Rotationsbewegung geöffnet bzw. geschlossen werden. Der Passagier oder die Besatzung kann so auf einfache Weise die Verriegelungseinrichtung in eine geschlossene bzw. in eine geöffnete Stellung bewegen. Das Rotationszentrum ist dabei bevorzugt die Aussparung.

Vorzugsweise ist an einer Anlagefläche der Halteplatte, an der die Kuppa im eingesetzten Zustand anliegt, eine Fase vorgesehen. Die Fase hat dabei vorzugsweise eine runde, eine konvexe oder eine konkave Form. Vorzugsweise ist die Fase an einer Kante der Aussparung, die den Übergang zu einer nach oben gerichteten Grundfläche der Halteplatte bildet, vorgesehen. Alternativ kann die Fase aber auch an einer Kante der Verriegelungsvorrichtung vorgesehen sein, durch die die Anlagefläche zu der Kuppa gebildet wird; die Verriegelungseinrichtung ist in diesem Fall als Bestandteil der Halteplatte anzusehen. Durch die Fase ergibt sich der Vorteil, dass die Auflagefläche zwischen der Kuppa und der Aussparung erhöht und damit die Bewegungsfreiheit des Gefäßes in der Aussparung verringert wird. Ferner ist es durch die Fase notwendig, das Gefäß bei einer Entnahme aus der Aussparung in vertikaler Richtung leicht anzuheben, woraus sich ein weiterer Sicherheitsvorteil ergibt. Des Weiteren ergibt sich der Vorteil, dass die Längsachse des Gefäßes orthogonal zu der Halteplatte ausgerichtet ist. Die exakte Ausrichtung des Gefäßes in der Halteplatte ist für ein hochwertiges Erscheinungsbild äußerst wichtig, so dass diese von der Besatzung oder dem Passagier nach jedem Abstellen des Gefäßes selbst vorgenommen werden müsste. Durch die Fase an der Oberkante der Aussparung wird das Gefäß selbstständig in eine vorgesehene Halteposition gebracht, so dass eine manuelle Ausrichtung des Gefäßes entfallen kann.

Weiter vorzugsweise ist die Fase formkorrespondierend zu dem Aufnahmequerschnitt des Gefäßes ausgeführt. Dies ist besonders vorteilhaft, wenn in der Kabine ausschließlich Gefäße mit identischer Kontur verwendet werden sollen. Durch die formkorrespondierende Geometrie der Fase zu der entsprechend an der Fase anliegenden Fläche der Kuppa, kann das Gefäß besonders zuverlässig in der Aussparung gehalten werden.

Erfindungsgemäß wird eine Haltevorrichtung vorgeschlagen, wobei die Halteplatte eine Aussparung zur Aufnahme des Gefäßes im Bereich der Kuppa aufweist, wobei wenigstens ein Randbereich der Aussparung bis zu einem Rand der Halteplatte reicht, wobei die Halteplatte in der Nutzstellung derart ausgerichtet ist, dass die Aussparung frei zugänglich ist.

Die Erfindung wird im Folgenden anhand bevorzugter Ausführungsformen unter Bezugnahme auf die beigefügten Figuren erläutert. Dabei zeigt:
- Fig. 1: einen Flugzeugsitz mit einer Trägerplattform;
- Fig. 2: eine Armlehne mit einem erfindungsgemäßen Getränkehalter;
- Fig. 3: eine Halteplatte mit einer mechanischen Verbindungsvorrichtung;
- Fig. 4: eine Halteplatte mit einer abweichenden Ausrichtung eines Randbereichs einer Aussparung;
- Fig. 5: eine Halteplatte mit verschiedenen Geometrien der Aussparung und des Randbereichs der Aussparung;
- Fig. 6: eine Halteplatte, bei der eine Aussparung und ein Randbereich zusammen U-förmig ausgebildet sind;
- Fig. 7: eine Halteplatte mit einer ersten Ausführungsform einer Verriegelungseinrichtung;
- Fig. 8: eine Halteplatte mit einer zweiten Ausführungsform einer Verriegelungseinrichtung;
- Fig. 9: eine Halteplatte mit einer dritten Ausführungsform einer Verriegelungseinrichtung; und
- Fig. 10: eine Halteplatte mit einer Fase an der Oberkante der Aussparung.

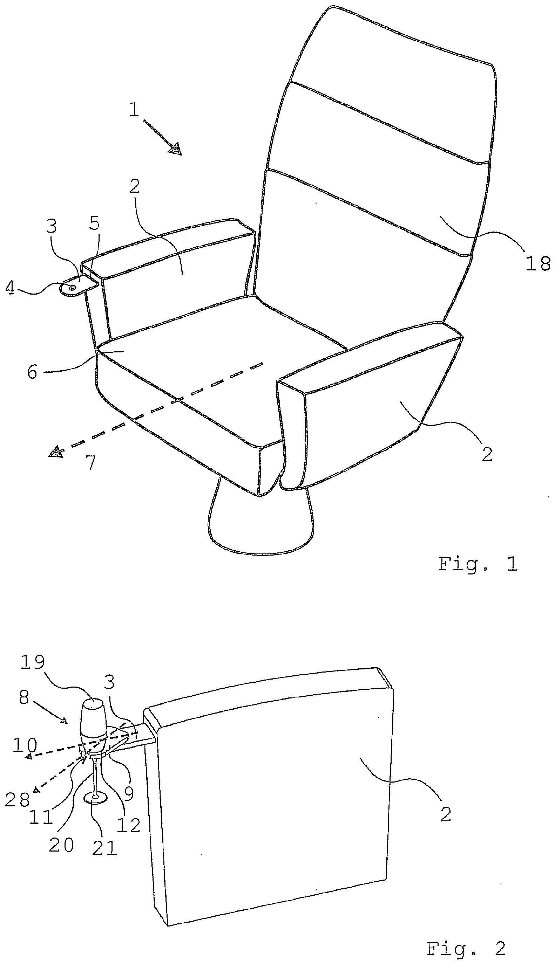

Fig. 1 zeigt einen Flugzeugsitz 1 mit einer Sitzfläche 6, einer Sitzlehne 18 und zwei Armlehnen 2. Eine Längsachse 7 des Flugzeugsitzes 1 liegt dabei parallel zu der Blickrichtung eines geradeausblickenden Passagiers, der in dem Flugzeugsitz 1 sitzt. Je nach Einbaurichtung des Flugzeugsitzes 1 verläuft die Längsachse 7 des Flugzeugsitzes 1 entsprechend parallel zu der Längsachse des Flugzeugs, in dem der Flugzeugsitz 1 eingebaut ist.

An der rechten Armlehne 2 des Flugzeugsitzes 1 ist eine Trägerplattform 3 befestigt, die dazu dient, eine in Fig. 2 gezeigte Halteplatte 9 mit dem Flugzeugsitz 1 zu verbinden. Die Trägerplattform 3 und die Halteplatte 9 lassen sich von einer Parkstellung in eine Nutzstellung bewegen und umgekehrt. In der Nutzstellung ist die Halteplatte 9 im Wesentlichen parallel zu der Sitzfläche 6 ausgerichtet. In der Parkstellung befinden sich die Halteplatte 9 und die Trägerplattform 3 in einer Aufnahme 5 des Flugzeugsitzes 1. Die Aufnahme 5 und die Trägerplattform 3 sind in diesem Ausführungsbeispiel an der rechten Armlehne 2 des Flugzeugsitzes 1 angeordnet; alternativ besteht die Möglichkeit der Anordnung an der linken Armlehne 2 oder an einer anderen Komponente des Flugzeugsitzes 1.

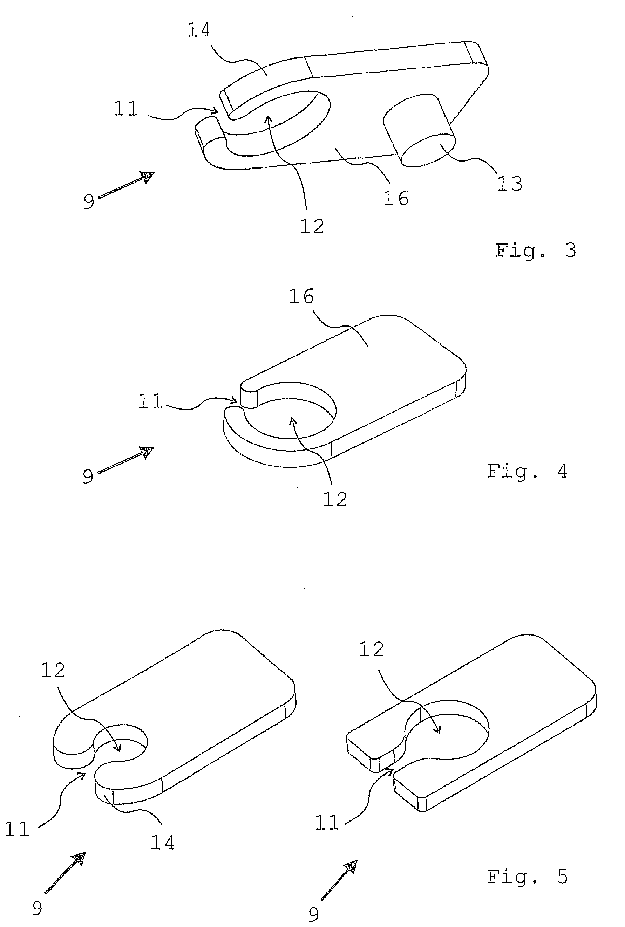

Fig. 2 zeigt eine schematische Ansicht der rechten Armlehne 2 eines Flugzeugsitzes 1, wobei die Anbringung der Halteplatte 9 detailliert dargestellt ist. Analog zu dem hier beschriebenen Aufbau kann die Halteplatte 9 alternativ auch an der linken Armlehne 2 angeordnet sein. Die Halteplatte 9 ist drehbar mit der Trägerplattform 3 verbunden. Die Rotationsachse ist vorzugsweise im Wesentlichen orthogonal zu der Ebene der Sitzfläche 6 ausgerichtet. Hierfür ist an der Halteplatte 9 eine Verbindungsvorrichtung 13 (siehe Fig. 3) und an der Trägerplattform 3 ein mechanischer Verbindungsanschluss 4 vorgesehen. Die Verbindungsvorrichtung 13 und der Verbindunganschluss 4 bilden damit vorzugsweise ein Drehgelenk. Vorzugsweise wird die Verbindungsvorrichtung 13 durch einen Bolzen gebildet und der Verbindungsanschluss 4 durch eine formkorrespondierende Öffnung. Weiter vorzugsweise sind die Verbindungsvorrichtung 13 und/oder der Verbindungsanschluss 4 dezentral in einem Randbereich der Halteplatte 9 oder der Trägerplattform 3 angeordnet, so dass eine Verschwenkbewegung der Halteplatte 9 gegenüber der Trägerplattform 3 und damit gegenüber dem Flugzeugsitz 1 mit einer gleichzeitigen seitlichen Versatzbewegung der Aussparung 12 möglich ist.

Die Halteplatte 9 nimmt unmittelbar nach dem Vollziehen der Bewegung von der Parkstellung in die Nutzstellung eine Initialstellung ein. Die Richtung der Initialstellung ist in Fig. 2 beispielhaft durch den Pfeil 10 dargestellt. Es ist jedoch auch möglich, eine davon abweichende Initialstellung festzulegen. In Fig. 2 ist die Halteplatte 9 damit gegenüber der Initialstellung nach links verdreht. Die Halteplatte 9 befindet sich in der Initialstellung, wenn die Längsachse 28 der Halteplatte 9 und der Pfeil 10 im Wesentlichen denkungsgleich sind.

Die Halteplatte 9 weist eine Aussparung 12 auf, die dazu dient, ein Gefäß 8 mit einer Kuppa 19, einem Stiel 20 und einem Fuß 21 zu halten. Der Fuß 21 kann dabei auch als Gegengewicht ohne eine plane Aufstandsfläche ausgebildet sein, durch den nicht die eigentliche Funktion eines Fußes 21, nämlich das Abstellen auf einer im Wesentlichen planen Ebene, ermöglicht wird, sondern stattdessen nur eine Schwerpunktverlagerung nach unten bewirkt wird. Es können ferner neben typischen Gefäßen für Getränke beispielsweise auch Blumenvasen in einem ansprechenden Design in der Halteplatte 9 abgestellt werden. Die Aussparung 12 ist so dimensioniert, dass sie kleiner ist als der Durchmesser der Kuppa 19; die Kuppa 19 wird somit durch die Aussparung 12 an einer Anlagefläche gehalten. Die Aussparung 12 ist vorzugsweise kleiner als der Durchmesser des Fußes 21. Das Gefäß 8 kann somit nicht von oben in die Aussparung 12 gesteckt bzw. herausgezogen werden. Aus diesem Grund und aus Gründen einer ergonomischeren Bewegung beim Abstellen des Gefäßes 8, ist die Aussparung 12 in wenigstens einer Richtung geöffnet; d.h. ein Randbereich 11 der Aussparung 12 reicht bis zu einem Rand 14 der Halteplatte 9. Der Rand 14 ist die Fläche, die zwischen zwei Grundflächen 16 der Halteplatte 9 liegt. Über den Randbereich 11 ist es so möglich, den Stiel 20 in einer senkrechten Stellung in die Aussparung 12 der horizontal ausgerichteten Halteplatte 9 zu führen. Die Aussparung 12 ist dabei so bemessen, dass die Anlagefläche zwischen der Aussparung 12 und dem Gefäß 8 möglichst nahe an dem Schwerpunkt des Gefäßes 8 liegt, vorzugsweise oberhalb des Schwerpunkts. Für die Berechnung des Schwerpunktes des Gefäßes 8 wird vorzugsweise das ungefüllte Gefäß 8 angenommen, weiter vorzugsweise wird der Füllstand in Form einer vollständigen Befüllung des Gefäßes 8 mit einem Getränk angenommen und insbesondere vorzugsweise ein mittlerer Füllstand des Gefäßes 8. Durch die Annäherung der Anlagefläche an den Schwerpunkt des Gefäßes 8 kann das auf das Gefäß 8 wirkende Kippmoment reduziert werden. Liegt die Anlagefläche oberhalb des Schwerpunktes des Gefäßes 8, so liegt ein stabiles System vor, so dass sich das Gefäß 8 nach einer Auslenkung durch ein Kippmoment wieder selbstständig in die vertikale Sollposition bewegt.

In der Regel wird der Flugzeugsitz 1 mit seiner Längsachse 7 parallel zur der Längsachse des Flugzeugs eingebaut. Zumeist wird die Einbaurichtung des Flugzeugsitzes 1 so gewählt, dass der Passagier in Flugrichtung blickt. Vorzugsweise zeigt bei dieser Einbaurichtung der Randbereich 11 in der Initialstellung der Halteplatte 9 in Richtung des Pfeils 10, der dann parallel zur Längsachse 7 des Flugzeugs ausgerichtet ist, siehe z.B. Fig. 2 und Fig. 3. Es wird so gewährleistet, dass durch die während der Startphase des Flugzeugs auftretenden Beschleunigungen das Gefäß 8 nicht über den Randbereich 11 aus der Aussparung 12 rutschen kann. In einer weiteren bevorzugten Ausführungsform ist der Randbereich 11 im Wesentlichen seitlich zu der Längsachse 7 des Flugzeugsitzes angeordnet, siehe Fig. 4. Es kann damit gewährleistet werden, dass bei einem Einbau des Flugzeugsitzes 1, bei dem die Längsachse 7 des Flugzeugsitzes 1 parallel zu der Längsachse des Flugzeugs ausgerichtet ist, unabhängig von der Ausrichtung der Blickrichtung nach vorne oder hinten, der Randbereich in der Initialstellung orthogonal zu der Längsachse des Flugzeugs angeordnet ist. Ein Herausrutschen des Gefäßes 8 kann somit nur durch relativ selten vorkommende Querbeschleunigungen hervorgerufen werden.

In Fig. 5 sind zwei weitere Ausführungsformen der Halteplatte 9 gezeigt. Dabei zeigt Fig. 5, links eine relativ kleine Aussparung 12. Der Rand 14 bildet dabei einen abgerundeten Übergang zu dem Randbereich 11. Dies hat den Vorteil, dass das Einfädeln des Stiels 20 in den Randbereich 11 und damit in die Aussparung 12 erleichtert wird. Fig. 5, rechts zeigt eine im Vergleich zu Fig. 5, links große Aussparung 12 bei einer fast gleichbleibenden Breite des Randbereichs 11. Durch die relativ große Aussparung 12 des Randbereichs 11 wird die Anlagefläche an der Kuppa 19 im Vergleich zu Fig. 5, links nach oben verlagert. Dies bedeutet wiederum, dass für eine Entnahme des Gefäßes 8 aus der Aussparung 12 das Gefäß 8 stärker angehoben werden muss als bei der Ausführungsform in Fig. 5, links. Die Ausführungsform in Fig. 5, rechts bietet damit eine erhöhte Sicherheit gegen ein unbeabsichtigtes Herausrutschen des Gefäßes 8.

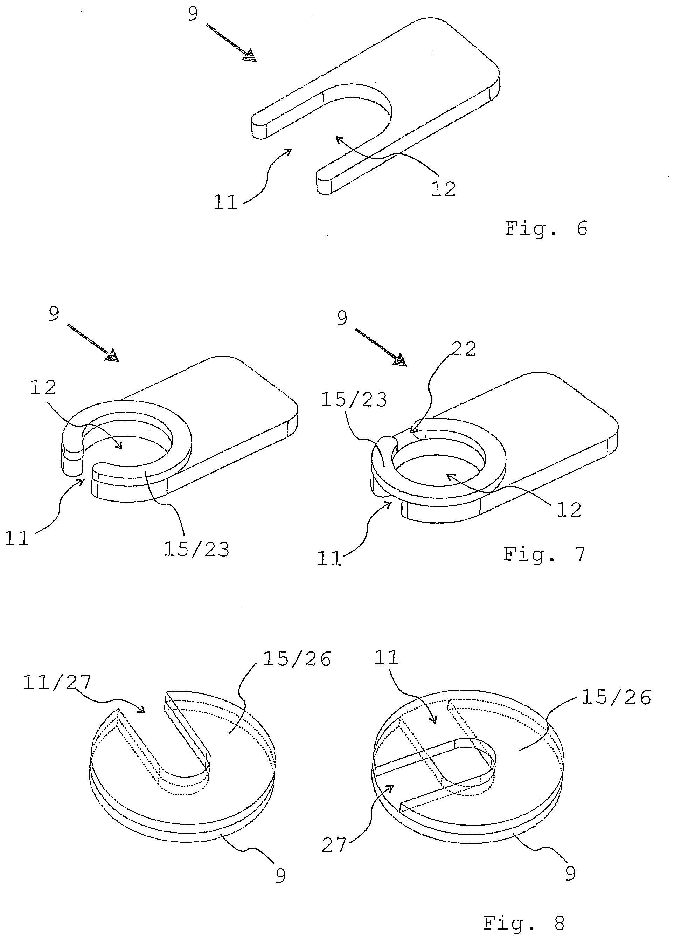

Fig. 6 zeigt eine weitere Ausführungsform der Halteplatte 9, bei der der Randbereich 11 zusammen mit der Aussparung 12 eine U-Form bildet. Zwischen der Aussparung 12 und dem Randbereich 11 ist somit keine Verjüngung vorgesehen, so dass das Risiko eines unerwünschten Herausfallens des Gefäßes 8 erhöht ist. Außerdem ist zum Entnehmen des Gefäßes 8 aus der Aussparung 12 eine reine Horizontalbewegung ausreichend; das Gefäß 8 muss so nicht angehoben werden.

Fig. 7 zeigt die Halteplatte 9 mit einer ersten Ausführungsform einer Verriegelungseinrichtung 15. Die Verriegelungseinrichtung 15 wird durch einen Ring 23 mit einer Öffnung 22 gebildet, der vorzugsweise auf der oberen Grundfläche 16 der Halteplatte 9 verdrehbar angeordnet ist. Durch die Anordnung des Rings 23 an der Oberseite der Halteplatte 9 wird eine einfache Handhabbarkeit bei der Verdrehung des Rings 23 gegenüber der Halteplatte 9 ermöglicht. Durch eine Rotation des Rings 23 kann die Öffnung 22 mit dem Randbereich 11 deckungsgleich ausgerichtet werden; die Verriegelungseinrichtung 15 befindet sich dann in der geöffneten Stellung (siehe Fig. 7, links). In der geöffneten Stellung ist die Aussparung 12 über den Randbereich 11 freigegeben, so dass der Stiel 20 eines Gefäßes 8 in die Aussparung 12 bzw. aus ihr heraus bewegt werden kann. Wird die Verriegelungseinrichtung 15 aus der geöffneten Stellung so weit verdreht, dass der Randbereich 11 und die Öffnung 22 nicht mehr deckungsgleich sind, dann befindet sich die Verriegelungseinrichtung 15 in der geschlossenen Stellung (siehe Fig. 7, rechts). Der Stiel 20 des Gefäßes 8 kann in dieser Stellung nicht mehr aus der Aussparung 12 bewegt werden. Da die Größe der Aussparung 12 vorzugsweise so gewählt ist, dass sie kleiner ist als der Fuß 21, kann das Gefäß 8 nicht nach oben aus der Aussparung 12 gezogen werden. Das Gefäß 8 ist somit in geschlossener Stellung der Verriegelungseinrichtung 15 in allen Raumrichtungen vor einem Herausfallen gesichert, womit die Sicherheit an Bord des Flugzeuges erhöht wird. Der Ring 23 ist dabei vorzugsweise in einer an der Halteplatte 9 angeordneten Führung gelagert, wobei alternativ auch eine magnetische Lagerung des Rings 23 möglich ist.

Fig. 8 zeigt eine zweite Ausführungsform der Verriegelungseinrichtung 15. Die Verriegelungseinrichtung 15 ist hier durch eine kreisförmige Scheibe 26 gebildet, die die Kontur der Halteplatte 9 nachbildet und gegenüber der Halteplatte 9 drehbar gelagert ist. In der Scheibe 26 ist eine Nut 27 vorgesehen, die in Abhängigkeit von der Stellung der Scheibe 26 mit dem Randbereich 11 und der Aussparung 12 in Deckung gebracht werden kann; die Verriegelungseinrichtung 15 befindet sich dann in der geöffneten Stellung (siehe Fig. 8, links). Durch Rotation der Scheibe 26 gegenüber der Halteplatte 9 ist die Verriegelungseinrichtung 15 in die geschlossene Stellung bringbar (siehe Fig. 8, rechts).

Bei den in den Fig. 7 und Fig. 8 gezeigten Ausführungsformen liegt die Kuppa 19 jeweils an dem Ring 23 bzw. an der Scheibe 26 an und nicht an der Aussparung 12. Alternativ kann die Verriegelungseinrichtung 15 auch an der Unterseite der Halteplatte 9 angeordnet sein, so dass das Gefäß 8 nach wie vor unmittelbar an der Halteplatte 9 anliegt.

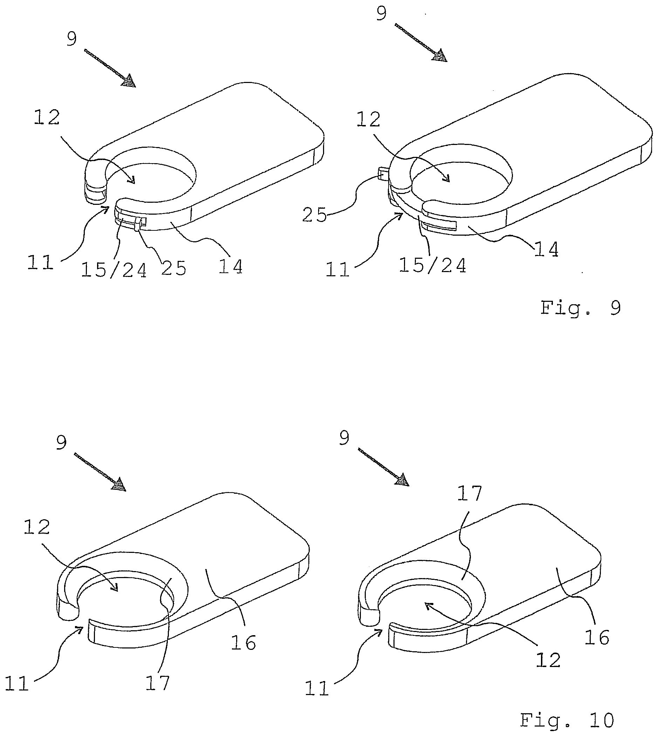

Fig. 9 zeigt eine weitere Ausführungsform der Erfindung, bei der die Verriegelungseinrichtung 15 durch einen Riegel 24 gebildet ist. Der Riegel 24 ist an dem Rand 14 so angeordnet, dass durch ihn der Randbereich 11 verriegelbar ist. Über ein Betätigungsmittel 25 kann der Riegel 24 von einer geöffneten Stellung (siehe Fig. 9, links) in eine geschlossene Stellung (siehe Fig. 9, rechts) bewegt werden. Um den Riegel 24 zu öffnen bzw. zu schließen, folgt er in diesem Ausführungsbeispiel der kreisförmigen Kontur des Randes 14. Der Riegel 14 wird somit durch eine Rotationsbewegung gegenüber der Halteplatte 9 in die geöffnete bzw. in die geschlossene Stellung gebracht. Alternativ kann die Verriegelungseinrichtung 15 auch so ausgeführt sein, dass sich ein linearer Bewegungsablauf ergibt.

Weiter besteht die Möglichkeit, die Verriegelungseinrichtung 15 über eine Betätigungseinrichtung zu bedienen. Der Passagier muss damit nicht den gesamten Bewegungsablauf der Verriegelungseinrichtung 15 selbst vornehmen, sondern kann die Verriegelungseinrichtung 15 komfortabel, beispielsweise durch die Betätigung einer Taste, steuern. Die Bewegung der Verriegelungseinrichtung 15 erfolgt dann vorzugsweise über einen federvorgespannten Mechanismus oder über einen elektronischen Aktuator.

Fig. 10 zeigt eine Ausführungsform der Erfindung, bei der an der Anlagefläche zwischen der Kuppa 19 und der Aussparung 12 eine Fase 17 vorgesehen ist. Durch die Fase wird eine verbesserte Lagerung der Kuppa 19 in der Aussparung 12 ermöglicht und damit die Gefahr des Herausfallens des Gefäßes 8 reduziert. Die Fase 17 ist vorzugsweise formkorrespondierend mit der jeweiligen Anlagefläche der Kuppa 19 ausgebildet. Hierfür ist eine runde Form (siehe Fig. 10, links), eine konvexe Form (siehe Fig. 10, rechts) oder auch eine konkave Form der Fase 17 möglich.

Alternativ kann bei den in den Figuren 7 und 8 dargestellten Ausführungsformen die Fase 17 auch an der Anlagefläche zwischen der Kuppa 19 und der Verriegelungseinrichtung 15 vorgesehen sein.

Zu dem Offenbarungsgehalt dieser Anmeldung sind ausdrücklich auch beliebige Kombinationen der in den Fig. 3 bis Fig. 10 gezeigten Ausführungsformen der Halteplatte 9 und der Verriegelungseinrichtung 15 hinzuzurechnen.

## Patentansprüche

1. Flugzeugsitz (1) mit einer Halteplatte (9) zur Aufnahme von Gefäßen (8) mit einem Stiel (20), einer Kuppa (19) und einem Fuß (21), wobei
- der Flugzeugsitz (1) mindestens eine Aufnahme (5) und eine bewegliche Trägerplattform (3) aufweist, wobei
- die Trägerplattform (3) einen mechanischen Verbindungsanschluss (4) aufweist, wobei
- an der Trägerplattform (3) die Halteplatte (9) mit einer mechanischen Verbindungsvorrichtung (13) an dem Verbindungsanschluss (4) der Trägerplattform (3) angeschlossen ist, wobei
- die Trägerplattform (3) mit der Halteplatte (9) aus einer Parkstellung in eine Nutzstellung bewegbar ist, wobei
- die Trägerplattform (3) mit der Halteplatte (9) in der Parkstellung in der Aufnahme (5) gehalten ist, wobei
- die Halteplatte (9) eine Aussparung (12) zur Aufnahme des Gefäßes (8) im Bereich der Kuppa (19) aufweist, wobei
- die Halteplatte (9) in der Nutzstellung derart angeordnet ist, dass die Aussparung (12) frei zugänglich ist und damit die Halteplatte (9) allein durch die Trägerplattform (3) im Raum gehalten wird, wobei
- wenigstens ein Randbereich (11) der Aussparung (12) bis zu einem Rand (14) der Halteplatte (9) reicht, so dass die Aussparung (12) in eine Richtung geöffnet ist, **dadurch gekennzeichnet, dass**
- die Verbindungsvorrichtung (13) der Halteplatte (9) um eine orthogonal zu der Ebene einer Sitzfläche (6) des Flugzeugsitzes ausgerichtete Rotationsachse verschwenkbar an dem Verbindungsanschluss (4) der Trägerplattform (3) angeschlossen ist.

2. Flugzeugsitz (1) nach Anspruch 1, **dadurch gekennzeichnet, dass**
- der Flugzeugsitz (1) mindestens eine Armlehne (2) umfasst, wobei
- die bewegliche Trägerplattform (3) an oder in der Armlehne (2) angeordnet ist.

3. Flugzeugsitz (1) nach einem der vorangehenden Ansprüche, **dadurch gekennzeichnet, dass**
- sich die Halteplatte (9) unmittelbar nach Vollziehen der Bewegung von der Parkstellung in die Nutzstellung in einer Initialstellung befindet, wobei
- die Halteplatte in der Initialstellung so angeordnet ist, dass der Randbereich (11) durch die Aussparung (12) im Wesentlichen in orthogonaler Richtung zu einer Längsachse (7) des Flugzeugsitzes (1) bis zu dem Rand (14) der Halteplatte (9) geöffnet ist.

4. Flugzeugsitz (1) nach einem der vorangehenden Ansprüche, **dadurch gekennzeichnet, dass**
- an der Halteplatte (9) eine Verriegelungseinrichtung (15) vorgesehen ist, mit der der Randbereich (11) der Aussparung (12) vollständig von dem Rand (14) der Halteplatte (9) abgrenzbar ist.

5. Flugzeugsitz (1) nach Anspruch 4, **dadurch gekennzeichnet, dass**
- die Verriegelungseinrichtung (15) durch eine Rotationsbewegung geöffnet bzw. geschlossen werden kann.

6. Flugzeugsitz (1) nach einem der vorangehenden Ansprüche, **dadurch gekennzeichnet, dass**
- an einer Anlagefläche der Halteplatte (9), an der die Kuppa (19) im eingesetzten Zustand anliegt, eine Fase vorgesehen ist.

7. Flugzeugsitz (1) nach Anspruch 6, **dadurch gekennzeichnet, dass**
- die Fase (17) formkorrespondierend zu dem Aufnahmequerschnitt des Gefäßes (8) ist.

## Claims

1. Aircraft seat (1) comprising a holding plate (9) for receiving receptacles (8) which have a stem (20), a bowl (19) and a foot (21), wherein
- the aircraft seat (1) comprises at least one mount (5) and a movable supporting platform (3), wherein
- the supporting platform (3) comprises a mechanical connecting socket (4), wherein
- on the supporting platform (3), the holding plate (9) is connected by a mechanical connecting device (13) to the connecting socket (4) of the supporting platform (3), wherein
- the supporting platform (3) with the holding plate (9) can be moved out of a parked position into a use position, wherein
- in the parked position, the supporting platform (3) with the holding plate (9) is held in the mount (5), wherein
- the holding plate (9) comprises a recess (12) for receiving the receptacle (8) in the region of the bowl (19), wherein
- in the use position, the holding plate (9) is arranged such that the recess (12) is freely accessible, and so the holding plate (9) is held spatially only by the supporting platform (3), wherein
- at least one peripheral region (11) of the recess (12) extends as far as an edge (14) of the holding plate (9) such that the recess (12) is open in one direction, **characterized in that**
- the connecting device (13) of the holding plate (9) is connected to the connecting socket (4) of the supporting platform (3) so as to be pivotable around a rotational axis which is oriented orthogonally to the plane of a seat surface (6) of the aircraft seat.

2. Aircraft seat (1) according to claim 1, **characterized in that**
- the aircraft seat (1) includes at least one armrest (2), wherein
- the movable supporting platform (3) is arranged on or in the armrest (2).

3. Aircraft seat (1) according to any one of the preceding claims, **characterized in that**
- immediately after moving from the parked position into the use position, the holding plate (9) is in an initial position, wherein
- in the initial position, the holding plate is arranged such that the peripheral region (11) is opened through the recess (12) substantially in an orthogonal direction to a longitudinal axis (7) of the aircraft seat (1) as far as the edge (14) of the holding plate (9).

4. Aircraft seat (1) according to any one of the preceding claims, **characterized in that**
- provided on the holding plate (9) is a locking means (15) which can fully demarcate the peripheral region (11) of the recess (12) from the edge (14) of the holding plate (9).

5. Aircraft seat (1) according to claim 4, **characterized in that**
- the locking means (15) can be opened or closed by a rotational movement.

6. Aircraft seat (1) according to any one of the preceding claims, **characterized in that**
- a bevel is provided on a contact surface of the holding plate (9), against which the bowl (19) rests in the inserted state.

7. Aircraft seat (1) according to claim 6, **characterized in that**
- the shape of the bevel (17) corresponds to the receiving cross section of the receptacle (8).

## Revendications

1. Siège d'avion (1) comprenant une plaque de fixation (9) destinée à recevoir des récipients (8) dotés d'une tige (20), d'une coupe (19) et d'un pied (21), dans lequel
- le siège d'avion (1) comporte au moins un logement (5) et une plate-forme de support (3) mobile, dans lequel
- la plate-forme de support (3) comporte un raccord de liaison (4) mécanique, dans lequel
- sur la plate-forme de support (3), la plaque de fixation (9) est raccordée au raccord de liaison (4) de la plate-forme de support (3) au moyen d'un dispositif de liaison (13) mécanique, dans lequel
- la plate-forme de support (3) peut être déplacée avec la plaque de fixation (9) d'une position de rangement à une position d'utilisation, dans lequel
- dans la position de rangement, la plate-forme de support (3) est maintenue avec la plaque de fixation (9) dans le logement (5), dans lequel
- la plaque de fixation (9) comporte un évidement (12) pour recevoir le récipient (8) dans la zone de la coupe (19), dans lequel
- la plaque de fixation (9) est disposée, dans la position d'utilisation, de telle manière que l'évidement (12) est librement accessible et qu'ainsi la plaque de fixation (9) est maintenue dans l'espace uniquement par la plate-forme de support (3), dans lequel
- au moins une zone de bord (11) de l'évidement (12) s'étend jusqu'à un bord (14) de la plaque de fixation (9), de telle sorte que l'évidement (12) est ouvert dans une direction, **caractérisé en ce que**
- le dispositif de liaison (13) de la plaque de fixation (9) est raccordé au raccord de liaison (4) de la plate-forme de support (3) de manière pivotante sur un axe de rotation orienté perpendiculairement au plan d'une assise (6) du siège d'avion.

2. Siège d'avion (1) selon la revendication 1, **caractérisé en ce que**
- le siège d'avion (1) comprend au moins un accoudoir (2), dans lequel
- la plate-forme de support (3) mobile est disposée sur ou dans l'accoudoir (2).

3. Siège d'avion (1) selon l'une des revendications précédentes, **caractérisé en ce que**
- directement après l'exécution du déplacement de la position de rangement à la position d'utilisation, la plaque de fixation (9) se trouve dans une position initiale, dans lequel
- dans la position initiale, la plaque de fixation est disposée de telle sorte que la zone de bord (11) est ouverte par l'évidement (12) jusqu'au bord (14) de la plaque de fixation (9) sensiblement dans la direction perpendiculaire à un axe longitudinal (7) du siège d'avion (1).

4. Siège d'avion (1) selon l'une des revendications précédentes, **caractérisé en ce que**
- un moyen de verrouillage (15) est prévu sur la plaque de fixation (9), au moyen duquel la zone de bord (11) de l'évidement (12) peut être entièrement délimitée par le bord (14) de la plaque de fixation (9).

5. Siège d'avion (1) selon la revendication 4, **caractérisé en ce que**
- le moyen de verrouillage (15) peut être ouvert ou fermé par un mouvement de rotation.

6. Siège d'avion (1) selon l'une des revendications précédentes, **caractérisé en ce que**
- un chanfrein est prévu sur une surface d'appui de la plaque de fixation (9), sur laquelle la coupe (19) appuie lorsqu'elle est en place.

7. Siège d'avion (1) selon la revendication 6, **caractérisé en ce que**
- le chanfrein (17) est correspondant à la forme de la section transversale de réception du récipient (8).
